# EUROPEAN PATENT SPECIFICATION

(11) **EP 4 075 942 B1**
(45) Date of publication and mention of the grant of the patent: **13.08.2025**
(21) Application number: 20816617.3
(22) Date of filing: 19.11.2020
(51) Int. Cl.: A01D 41/127, A01D 41/14, A01D 75/18, A01D 57/02, A01D 61/00

(54) **MULTI-SECTION HARVESTING HEADER AND CONTROL METHOD**
ERNTEVORSATZ MIT MEHREREN SEKTIONEN UND STEUERUNGSVERFAHREN
COLLECTEUR DE RÉCOLTE À SECTIONS MULTIPLES ET PROCÉDÉ DE COMMANDE ASSOCIÉ

(30) Priority: 19.12.2019 GB 201918836
(43) Date of publication of application: 26.10.2022
(73) Proprietor: AGCO International GmbH, 8212 Neuhausen am Rheinfall (CH)
(72) Inventor: BOJSEN, Thomas, 8930 Randers (DK)
(74) Representative: AGCO Intellectual Property Department
(86) International application number: PCT/IB2020/060927
(87) International publication number: WO 2021/123963

(56) References cited:
- US-A- 4 967 362
- US-A1- 2006 265 106
- US-A1- 2011 015 832
- US-A1- 2017 112 055
- US-A1- 2019 364 733

## Description

### FIELD OF THE INVENTION

The invention relates to crop gathering apparatus for harvesting machines such as combine harvesters, and in particular to a header including a table to receive cut crop and a crop gathering mechanisms such as reels, augers and draper belts arranged across the header width and operable to convey the cut crop inwardly to an outlet disposed in a rear wall of the header.

### BACKGROUND

United States patent US 7,540,130 describes an agricultural harvesting machine having a header in the form of a centre platform section and left and right wing sections. The centre platform section has a draper belt carrying cut crop into a feeder housing of the machine, and the wing sections have lateral draper belts carrying cut crop inwardly across the header to the centre platform section. Each of the wing sections has a respective gathering reel, with each reel coupled via a universal joint to a single driven shaft extending forwardly from the feeder housing and driving a synchronised rotation of the reels. Each wing section is pivotably attached to the centre platform section, and each features a respective hydraulic cylinder coupled between the wing section and centre section. Operation of the hydraulic cylinders causes the wing sections to be controllably tilted up or down relative to the centre platform section to facilitate harvesting on uneven ground.

United States patent US 10,813,288 describes an agricultural harvesting machine which includes a header, a feederhouse and a draper belt for transporting agricultural material to the feederhouse. The draper belt is controllable based on a distribution of crop across the header determined, for example, using potentially complex arrangements of machine mounted sensors and/or mapping data. Further related prior art is disclosed in US 2019/364733 A1 and US 4 967 362 A.

### SUMMARY OF THE INVENTION

According to a first aspect of the present invention there is provided a harvesting header for attachment to a harvesting machine, the header comprising two or more sub-assemblies each of which includes a respective crop gathering mechanism and a respective drive mechanism coupled to operate the crop gathering mechanism, wherein the drive mechanisms for the respective sub-assemblies are operable independently of one another and in dependence on a radius of a curved path travelled by the harvesting machine.

As will be described further below, by enabling the sub-assemblies to operate independently (e.g. at different speeds), a more efficient harvesting operation with reduced tendency to clogging or blocking becomes possible. By enabling the operation of the sub-assemblies to be controlled independently in dependence on a radius of curved path travelled by an associated harvesting machine, the header may account for variations in the effective forward speed of the header across the width of the header upon turning, thereby addressing problems associated with localised blocking of the header due to differing crop input rates across the header. Such an arrangement may also provide a less complex setup when compared with prior art systems which utilise various sensor arrangements for determining characteristics of the crop forward of the harvesting machine.

The drive mechanisms for the respective sub-assemblies may be configured such that an operating speed thereof is controllable in dependence on a radius of a curved path travelled by the harvesting machine
Preferably, each crop gathering mechanism of the harvesting header includes a respective reel to gather the cut crops into a table of the header, and each crop gathering mechanism suitably further includes a respective draper belt or auger to transport the cut crops inwardly to an outlet disposed in a rear wall of the header.

Each sub-assembly may include a respective cutter bar positioned to cut crops for gathering in by the reel, and the respective cutter bars across the header may be driven independently (i.e. at differing speeds) or may be operated in unison.

The harvesting header may have just two sub-assemblies disposed with one on either side of (and arranged to feed crops into) a central outlet disposed in a rear wall of the header, or it may comprise four or more sub-assemblies, suitably arranged in a line with those in outboard positions feeding those in inboard positions en route to the outlet.

According to a further aspect of the invention there is provided a harvesting machine having mounted thereon a header as recited above, the harvesting machine comprising a control unit for controlling operation of the drive mechanisms for the respective sub-assemblies of the header in dependence on a radius of a curved path travelled by the harvesting machine.

The invention further provides a harvesting machine having mounted thereon a header as recited above, the harvesting machine being configured to provide a respective source of motive power to each sub-assembly drive mechanism, and further comprising a control unit coupled with the sources of motive power and operable to cause the crop gathering mechanisms of the sub-assemblies to operate at different speeds from one another. The drive mechanisms may be mechanical (in the form of respective driven shafts from the harvesting machine to the header) or electrical (with electric drive motors for the respective components provided in each drive sub-assembly). As will be recognised, the latter arrangement may be preferable for simplicity of control where the header comprises multiple (e.g. three or more) sub-assemblies.

Preferably, the harvesting machine further comprises a turn-detection apparatus coupled with the control unit and arranged to detect when the harvesting machine is travelling on a curved path, with the control unit configured to vary an operating speed of the respective crop gathering mechanisms in dependence on a radius of the curved path being travelled. By running the crop gathering mechanism (or mechanisms) on the outside of a curved path at a higher speed than those on the inside path, as the effective forward speed of the header will vary across the width of the header as it turns, problems of localised blocking of the header due to differing crop input rates can be greatly reduced or cancelled.

In a harvesting machine as described in the previous paragraph, the turn-detection apparatus may comprise one or more sensors connected to detect a turn angle in a steering apparatus of the harvesting machine, or may comprise a satellite-based position determination system such as GPS or GNSS.

The harvesting machine may further comprise at least one respective sensor associated with each sub-assembly, which sensors may be mounted on the harvesting machine or the header. The sensors are coupled with the control unit, and configured to detect one or more characteristics of a crop in the path ahead of the sub-assembly, and the control unit is configured to vary the operating speeds to the respective crop gathering mechanisms in dependence on variations between detected crop characteristics

Also in accordance with the present invention there is provided a method of operating the harvesting header according to the first aspect of the invention, comprising determining a path being traversed by the header during a harvesting operation; detecting when the path is a curved path; and varying an operating speed of the respective crop gathering mechanisms in dependence on a radius of the curved path being travelled.

In embodiments, localised variation in detected standing crop density immediately ahead of the different sub-assemblies of the header (or other characteristics of the crop and/or path ahead) may be used to trigger a variation in operating speed between adjacent sub-assemblies.

### BRIEF DESCRIPTION OF THE DRAWINGS

The invention will now be described, by way of example only, with reference to the accompanying figures in which:
Figure 1 schematically illustrates an agricultural machine in the form of a combine harvester having a header suitably according to the first embodiment of the invention;
Figure 2 is a plan schematic view of a harvesting header according to a further embodiment of the invention;
Figure 3 is a schematic view of a further embodiment of a combine harvester and header travelling a straight path;
Figure 4 is a modified embodiment of the combine harvester and header of Fig. 4 travelling a curve;
Figure 5 is a further embodiment of harvesting header having forward looking sensors; and
Figure 6 is a flow chart illustrating a method of operating a harvesting header according to an embodiment of the invention.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives and modifications as will become apparent from consideration of the following detailed description.

Throughout the following description, the terms 'front', 'rear', 'left', 'right', 'transverse' and 'longitudinal' are used in relation to the normal forward (parallel to a longitudinal axis) direction of travel of the combine harvester 10.

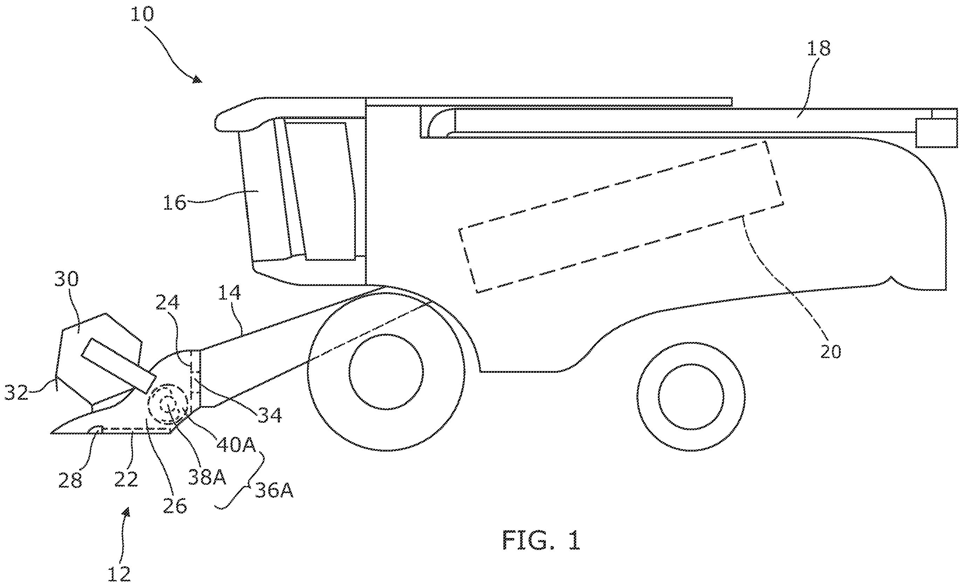

With reference to Figure 1, a combine harvester 10 comprises a header 12 attached to an elevator or feeder housing 14 in a known manner. The combine 10 further includes a driver's cab 16 and an unloading auger 18. Within the combine, indicated generally at 20, a crop processing mechanism separates the grain or other crop material from the supporting plant matter: various different configurations of crop processing mechanism are known, but these are not relevant to the understanding of the present invention and will not be further described.

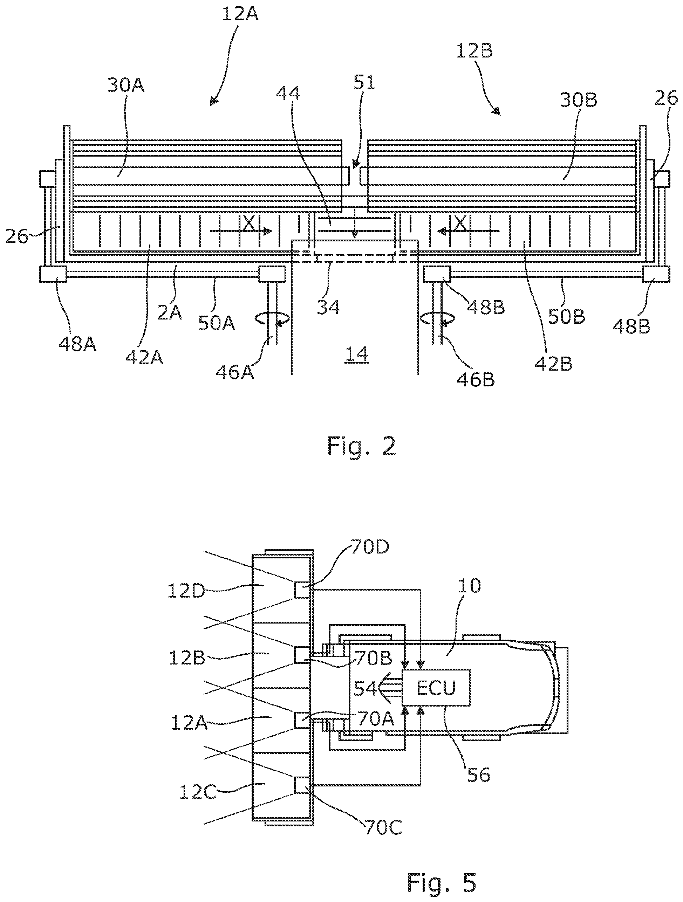

With reference also to Figure 2, the header 12 comprises a frame generally comprising a table (alternatively termed a bed or floor) 22, a rear wall 24 and two side walls 26. A standing crop such as cereals or maize is cut by a cutter bar 28 which is disposed on a leading edge of the table 22 as the combine 10 advances in a forward direction across a crop field.

As in known combine headers, the header 12 may further comprise a reel 30 which guides the crop into the header with a plurality of guide bars 32, commonly six, which are mounted on (hexagonal) wheels which rotate around a transverse axis above the cutter bar 28. As particularly shown in Fig. 2, the header comprises two crop gathering sub-assemblies (respectively identified by the suffixes A and B) each having a respective reel 30A, 30B.

In the embodiment of Fig. 1, the means to transfer the cut crop in the left-hand sub-assembly comprises an auger 36A which is suspended transversely across the width of the header sub-assembly 12A in close proximity to the rear wall 24 and table 22. The auger 36A comprises a rotor core 38A supported for rotation by a support shaft (not shown). Screw-flighting 40A is secured to the rotor core 38A. In operation, the auger 36A rotates and the flighting 40A engages the cut crop material so as to convey the crop material toward the centre of the header in the direction of arrows X shown in Figure 2. A similar arrangement (not shown) is provided in the right-hand sub-assembly.

Figure 2 shows an alternative means for conveying the cut crop across the table of the header sub-assembly 12A, 12B in the form of draper belts 42A, 42B which are driven conveyors extending across the respective portions of table 22 and which convey the cut crop inwardly in the direction of arrows X towards the opening 34.

As shown, the header may comprise a further belt 44 in a central section between the sub-assemblies 12A, 12B. This further belt 44 operates transversely to the draper belts 42A, 42B (having received cut crop deposited by the draper belts) and carries the cut crop through the opening 34 and into the feeder housing 14 for onward handling by the processing mechanism 20.

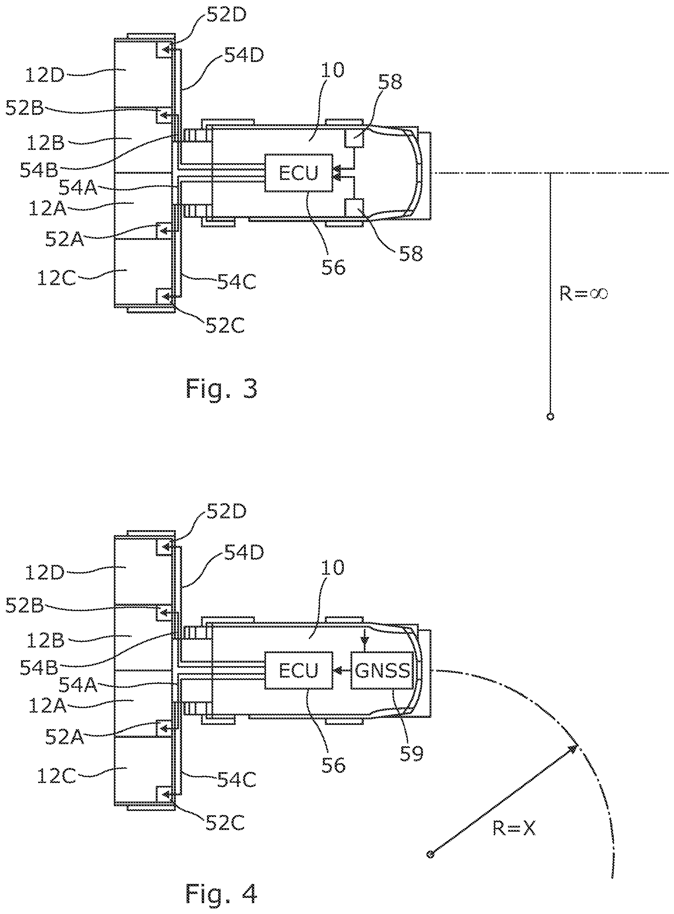

A key feature of the present invention is that the crop gathering mechanisms (reel and draper belt or auger) of one header sub-assembly are operable independently of the (or each) other. Whilst there is suitably coordination between e.g. the reel and draper belt speeds of one sub-assembly, it is important to recognise that the separate sub-assemblies may be operated at different speeds. The benefit of this independence will become clearer when considering the different crop-loading across the header when the combine executes a turn manoeuvre: this is discussed further with reference to Figures 3 and 4 below.

In order to provide independent drive to the sub-assemblies, different options are possible. In the embodiment of Fig. 2, mechanical drive is provided by two separate (and independently driven) driveshafts 46A, 46B extending from the combine 10 (suitably supported along respective sides of the feeder housing 14) to the header 12. Via one or more universal joints 48A, 48B and intermediate driveshafts 50A, 50B, the rotation of the driveshafts is transferred to drive rotation of the respective reels 30A, 30B. Further driveshafts (or driven spurs off the driveline to the reels) suitably power the draper belts 42A, 42B (or augers 36A in the embodiment of Fig. 1). The drive to the crop gathering components 30, 36, 42 may suitably be supplied at the laterally outermost points of each sub-assembly as shown, with a central support, indicated generally at 51, supporting and journaling the inward end of the crop gathering components. Providing drive to the inward ends of the components, with support at the outward ends, is also possible.

As an alternative to mechanical drive, one or more of the crop gathering components may be provided with electric drive through one or more electric motors mounted on the header and driving the components directly. This arrangement is preferred where there are e.g. four or more sub-assemblies as the control connections become simpler than having multiple mechanical drive shafts, and the (generally shorter) header sections and sub-assemblies will require less power to drive.

Figures 3 and 4 schematically represent a combine 10 having a header 12 with four sections 12, 12B, 12C, 12D (with 12C and 12D disposed respectively outwardly of sections 12A and 12B) and each of the sections being driven by a respective electric motor 52A, 52B, 52C, 52D. Each of the electric motors 52A, 52B, 52C, 52D is connected via a respective power supply line 54A, 54B, 54C, 54D to an electronic control unit (ECU) 56 of the combine 10, which ECU 56 is operable to independently control the power supply to each of the motors 52A, 52B, 52C, 52D and hence independently control the operating speed of each of the sub-assemblies.

The ECU 56, which will typically also control other operations of the combine 10, is connected with a turn detection apparatus by means of which the combine determines whether it is travelling on a straight path, or on a curved path (and in the latter case the radius R of the turn is also determined). In the embodiment of Fig. 3, the turn detection apparatus comprises one or more sensors 58 coupled with the (typically rear wheel) steering mechanism of the combine and feeding back indications of turn angle to the ECU 56. In the embodiment of Fig. 4, the turn detection apparatus is provided by a satellite-based position determination system 59 (e.g. GNSS) which enables the path travelled, and the radius of any turn manoeuvres being performed, to be determined. The satellite-based position determination system may also form part of a planned-path following and/or automatic guidance system for the combine.

In Figure 3, the combine 10 is following a straight path with a turn radius R = ∞. In this situation (for this embodiment) it is assumed that the crop intake across all sections 12A, 12B, 12C, 12D of the header is constant, and all will be controlled by the ECU 56 to operate at the same speed V.

In Figure 4, the combine 10 is following a curved path with a turn radius R = X. In this situation, the forward speed of the outermost section 12D will be highest (compared to the sections closer to the inside of the turn - in order 12B, 12A, 12C) and the corresponding intake of cut crop also highest. Here the ECU 56 adjusts the relative operating speeds of the crop-gathering mechanisms of the sub-assemblies such that the outermost section 12D is operating faster than the next one inwards 12B, which is operating faster than the next one inwards 12A, with the innermost section 12C operating slowest of all. In the example shown, given a straight line operating speed V for the crop-gathering components, the resulting operating speeds may be:

| Section: | Speed: |
|---|---|
| 12D | V + 2Y |
| 12B | V+Y |
| 12A | V - Y |
| 12C | V-2Y |

where Y = f(R) is determined as a function of the turn radius R.

Figure 5 schematically represents a further embodiment of the independently controlled multi-section header described above. In this embodiment, the header 12 or combine 10 is provided with forward-looking sensors 70A, 70B, 70C, 70D coupled with the ECU 56 and configured to determine one or more characteristics of the path ahead for each header section. Such characteristics may include such factors as standing crop height and/or density, an indication of whether the crop is standing or laid down, crop moisture content, for which variation between the operating speeds of the header sections is desirable.

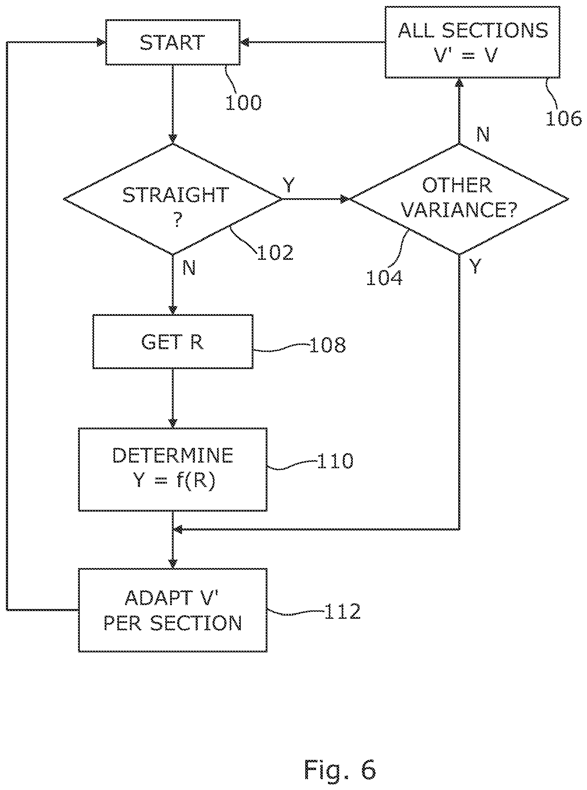

Figure 6 is a flow chart illustrating a method of operating the header 12, suitably under control of the ECU 56. Starting at step 100, the process moves to a determination (at step 102) as to whether the header 12 is travelling on a straight path. If so, the process moves to determining (at step 104) whether there is any other detected variance in the path characteristics, such as variance in crop density across the width of the header. If there is no variance, all header sections will operate at the same speed V' = V (step 106). If there is variance, the process moves to step 112 (below).

If step 102 determines that the header 12 (or the combine carrying the header) is turning, then at step 108 the radius R of the turn is determined. Next, at step 110, an extent of variance Y to be applied between the header operating sections is determined.

Following steps 104 and 110, the individual speeds of the header sections 12A, 12B, 12C, 12D are adapted in step 112 (based on the turn radius or other characteristic) and the process returns to the start 100.

As will be recognized, the variation of header section operating speeds may take account of both turn radius and other path characteristics, in which case the two branches of Fig. 6 may follow in sequence.

In the foregoing, the applicants have described a harvesting header 12 for attachment to a harvesting machine. The header 12 comprises two or more sub-assemblies 12A, 12B each of which includes a respective crop gathering mechanism 30, 42 and a respective drive mechanism 46, 48, 50 coupled to operate the crop gathering mechanism. The drive mechanisms for the respective sub-assemblies 12A, 12B are operable independently of one another to enable them to run at different speeds when the harvesting machine is performing a turn manoeuvre.

## Claims

1. A harvesting header for attachment to a harvesting machine, the header comprising two or more sub-assemblies each of which includes a respective crop gathering mechanism and a respective drive mechanism coupled to operate the crop gathering mechanism, wherein the drive mechanisms for the respective sub-assemblies are operable independently of one another and **characterised in that** said drive mechanisms are further operable in dependence on a radius of a curved path travelled by the harvesting machine.

2. A harvesting header according to Claim 1, wherein the drive mechanisms for the respective sub-assemblies are configured such that an operating speed thereof is controllable in dependence on a radius of a curved path travelled by the harvesting machine.

3. A harvesting header according to Claim 1 or Claim 2, wherein each crop gathering mechanism includes a respective reel.

4. A harvesting header according to any of Claims 1 to 3, wherein each crop gathering mechanism includes a respective draper belt.

5. A harvesting header according to any of Claims 1 to 3, wherein each crop gathering mechanism includes a respective auger.

6. A harvesting header according to any of Claims 1 to 5, comprising four or more sub-assemblies.

7. A harvesting machine having mounted thereon a header as claimed in any of Claims 1 to 6, the harvesting machine being configured to provide a respective source of motive power to each sub-assembly drive mechanism, and further comprising a control unit coupled with the sources of motive power and operable to cause the crop gathering mechanisms of the sub-assemblies to operate at different speeds from one another.

8. A harvesting machine as claimed in Claim 7, further comprising a turn-detection apparatus coupled with the control unit and arranged to detect when the harvesting machine is travelling on a curved path, and the control unit is configured to vary the operating speeds to the respective crop gathering mechanisms in dependence on a radius of the curved path being travelled.

9. A harvesting machine as claimed in Claim 8, wherein the turn-detection apparatus comprises one or more sensors connected to detect a turn angle in a steering apparatus of the harvesting machine.

10. A harvesting machine as claimed in Claim 8, wherein the turn-detection apparatus comprises a satellite-based position determination system.

11. A harvesting machine as claimed in any of Claims 7 to 10, further comprising at least one respective sensor associated with each sub-assembly, coupled with the control unit, and configured to detect one or more characteristics of a crop in the path ahead of the sub-assembly, and the control unit is configured to vary the operating speeds to the respective crop gathering mechanisms in dependence on variations between detected crop characteristics.

12. A method of operating the harvesting header of Claim 1, comprising determining a path being traversed by the header during a harvesting operation; detecting when the path is a curved path; and varying an operating speed of the respective crop gathering mechanisms in dependence on a radius of the curved path being travelled.

13. A method as claimed in Claim 12, further comprising detecting one or more characteristics of a crop in the path ahead of each sub-assembly, and varying the operating speeds of the respective crop gathering mechanisms in dependence on variations between detected crop characteristics.

## Patentansprüche

1. Erntevorsatz zur Anbringung an eine Erntemaschine, wobei der Vorsatz zwei oder mehr Unterbaugruppen aufweist, von welchen jede einen jeweiligen Erntegutsammelmechanismus und einen jeweiligen Antriebsmechanismus umfasst, die gekoppelt sind, um den Erntegutsammelmechanismus zu betreiben, wobei die Antriebsmechanismen für die jeweiligen Unterbaugruppen unabhängig voneinander betreibbar sind, und **dadurch gekennzeichnet, dass** die Antriebsmechanismen weiterhin in Abhängigkeit von einem Radius eines gekrümmten Wegs betreibbar sind, den die Erntemaschine zurücklegt.

2. Erntevorsatz nach Anspruch 1, wobei die Antriebsmechanismen für die jeweiligen Unterbaugruppen derart konfiguriert sind, dass eine Betriebsgeschwindigkeit derselben in Abhängigkeit von einem Radius eines von der Erntemaschine zurückgelegten gekrümmten Wegs steuerbar ist.

3. Erntevorsatz nach Anspruch 1 oder Anspruch 2, wobei jeder Erntegutsammelmechanismus eine jeweilige Haspel umfasst.

4. Erntevorsatz nach einem der Ansprüche 1 bis 3, wobei jeder Erntegutsammelmechanismus ein jeweiliges Seitenzuführband umfasst.

5. Erntevorsatz nach einem der Ansprüche 1 bis 3, wobei jeder Erntegutsammelmechanismus eine jeweilige Förderschnecke umfasst.

6. Erntevorsatz nach einem der Ansprüche 1 bis 5 mit vier oder mehr Unterbaugruppen.

7. Erntemaschine, auf welcher ein Vorsatz nach einem der Ansprüche 1 bis 6 montiert ist, wobei die Erntemaschine ausgebildet ist, um jedem Unterbaugruppen-Antriebsmechanismus eine jeweilige Triebkraft-Quelle bereitzustellen, und weiterhin eine Steuereinheit aufweist, die mit der Triebkraft-Quelle gekoppelt ist und betreibbar ist, um die Erntegutsammelmechanismen der Unterbaugruppen zu veranlassen, bei zueinander unterschiedlichen Geschwindigkeiten zu arbeiten.

8. Erntemaschine nach Anspruch 7, weiterhin mit einer Kurvendetektionsvorrichtung, die mit der Steuereinheit gekoppelt ist und eingerichtet ist, um zu detektieren, wenn die Erntemaschine einen gekrümmten Weg zurücklegt, und wobei die Steuereinheit ausgebildet ist, um die Betriebsgeschwindigkeiten für die jeweiligen Erntegutsammelmechanismen in Abhängigkeit von einem Radius des zurückgelegten gekrümmten Wegs zu variieren.

9. Erntemaschine nach Anspruch 8, wobei die Kurvendetektionsvorrichtung einen oder mehrere Sensoren aufweist, der oder die angeschlossen sind, um einen Kurvenwinkel in einer Lenkvorrichtung der Erntemaschine zu detektieren.

10. Erntemaschine nach Anspruch 8, wobei die Kurvendetektionsvorrichtung ein Satellitenbasiertes Positionsbestimmungssystem aufweist.

11. Erntemaschine nach einem der Ansprüche 7 bis 10, weiterhin mit mindestens einem jeweiligen Sensor, der jeder Unterbaugruppe zugeordnet ist, mit der Steuereinheit gekoppelt ist und ausgebildet ist, um ein oder mehrere Merkmale eines Ernteguts in dem Pfad vor der Unterbaugruppe zu detektieren, und wobei die Steuereinheit ausgebildet ist, um die Betriebsgeschwindigkeiten für die jeweiligen Erntegutsammelmechanismen in Abhängigkeit von Variationen zwischen detektierten Erntegut-Merkmalen zu variieren.

12. Verfahren zum Betreiben des Erntevorsatzes nach Anspruch 1, mit Bestimmen eines Wegs, der von dem Vorsatz während eines Erntebetriebs zurückgelegt wird; Detektieren, ob der Pfad ein gekrümmter Pfad ist; und Variieren einer Betriebsgeschwindigkeit der jeweiligen Erntegutsammelmechanismen in Abhängigkeit von einem Radius des zurückgelegten gekrümmten Wegs.

13. Verfahren nach Anspruch 12, weiterhin mit Detektieren eines oder mehrerer Merkmale eines Ernteguts in dem Weg vorjeder Unterbaugruppe und Variieren der Betriebsgeschwindigkeiten der jeweiligen Erntegutsammelmechanismen in Abhängigkeit von Variationen zwischen den detektierten Erntegut-Merkmalen.

## Revendications

1. Tête de moissonnage destinée à être couplée à une moissonneuse, la tête comprenant deux ou plusieurs sous-ensembles, chacun d'eux comportant un mécanisme de regroupement de culture respectif et un mécanisme d'entraînement respectif couplé de manière à commander le mécanisme de regroupement de culture, dans laquelle les mécanismes d'entraînement des sous-ensembles respectifs peuvent être commandés indépendamment l'un de l'autre et **caractérisée en ce que** lesdits mécanismes d'entraînement peuvent, en outre, être commandés sur la base d'un rayon d'un trajet courbe parcouru par la moissonneuse.

2. Tête de moissonnage selon la revendication 1, dans laquelle les mécanismes d'entraînement des sous-ensembles respectifs sont configurés de telle sorte que leur vitesse de fonctionnement peut être commandée sur la base d'un rayon d'un trajet courbe parcouru par la moissonneuse.

3. Tête de moissonnage selon la revendication 1 ou 2, dans laquelle chaque mécanisme de regroupement de culture comporte un rouleau respectif.

4. Tête de moissonnage selon l'une quelconque des revendications 1 à 3, dans laquelle chaque mécanisme de regroupement de culture comporte une bande de tablier respective.

5. Tête de moissonnage selon l'une quelconque des revendications 1 à 3, dans laquelle chaque mécanisme de regroupement de culture comporte une vis sans fin respective.

6. Tête de moissonnage selon l'une quelconque des revendications 1 à 5, comprenant quatre sous-ensembles ou plus.

7. Moissonneuse sur laquelle est montée une tête selon l'une quelconque des revendications 1 à 6, la moissonneuse étant configurée de manière à fournir une source de puissance motrice respective à chaque mécanisme d'entraînement de sous-ensemble, et comprenant, en outre, une unité de commande couplée aux sources de puissance motrice et pouvant être utilisée de manière à amener les mécanismes de regroupement de culture des sous-ensembles à fonctionner à différentes vitesses les uns des autres.

8. Moissonneuse selon la revendication 7, comprenant, en outre, un dispositif de détection de virage couplé à l'unité de commande et agencé de manière à détecter lorsque la moissonneuse se déplace sur un trajet courbe et l'unité de commande est configurée de manière à modifier les vitesses opérationnelles sur les mécanismes de regroupement de culture respectifs sur la base d'un rayon du trajet courbe parcouru.

9. Moissonneuse selon la revendication 8, dans laquelle le dispositif de détection de virage comprend un ou plusieurs capteurs raccordés afin de détecter un angle de virage sur un dispositif de direction de la moissonneuse.

10. Moissonneuse selon la revendication 8, dans laquelle le dispositif de détection de virage comprend un dispositif de détermination de position par satellite.

11. Moissonneuse selon l'une quelconque des revendications 7 à 10, comprenant, en outre, au moins un capteur respectif associé à chaque sous-ensemble, couplé à l'unité de commande et configuré de manière à détecter une ou plusieurs caractéristiques d'une culture sur le trajet vers l'avant du sous-ensemble et l'unité de commande est configurée de manière à modifier les vitesses de fonctionnement des mécanismes de regroupement de culture respectifs en fonction des variations entre les caractéristiques de culture détectées.

12. Procédé de commande de la tête de moissonneuse selon la revendication 1, comprenant la détermination d'un trajet traversé par la tête pendant une opération de moissonnage, la détection du fait que le trajet est un trajet courbe ; et la modification d'une vitesse de fonctionnement des mécanismes de regroupement de culture respectifs en fonction d'un rayon du trajet courbe parcouru.

13. Procédé selon la revendication 12, comprenant, en outre, la détection d'une ou plusieurs caractéristiques d'une culture sur le trajet vers l'avant de chaque sous-ensemble et la modification des vitesses de fonctionnement des mécanismes de regroupement de culture respectifs en fonction des variations entre les caractéristiques de culture détectées.
